Europäisches Patentamt

European Patent Office

Office européen des brevets

(19)

(11) Veröffentlichungsnummer: **0 061 554**

**A1**

(12)

# EUROPÄISCHE PATENTANMELDUNG

(21) Anmeldenummer: **81810127.1**

(22) Anmeldetag: **27.03.81**

(51) Int. Cl.³: **B 23 G 1/30**

(43) Veröffentlichungstag der Anmeldung:
**06.10.82 Patentblatt 82/40**

(84) Benannte Vertragsstaaten:
**AT BE CH DE FR GB IT LI NL SE**

(71) Anmelder: **Ernst Schäublin AG**
**Hintere Gasse 2**
**CH-4436 Oberdorf(CH)**

(72) Erfinder: **Schäublin, Ernst**
**Burgmattstrasse 16**
**CH-4437 Waldenburg(CH)**

(74) Vertreter: **Seehof, Michel et al,**
**c/o AMMANN PATENTANWAELTE AG BERN**
**Schwarztorstrasse 31**
**CH-3001 Bern(CH)**

(54) Schneideisen mit Halter.

(57) Der Halter (1) besteht aus einem Mittelteil (2) und zwei Griffen (3). Im Mittelteil sind das Schneideisen (11) und daran anschliessend eine Führungsbuchse (7) derart befestigt, dass diese beiden Teile nicht entfernt werden können.

FIG.2

EP 0 061 554 A1

Croydon Printing Company Ltd

- 1 -

## SCHNEIDEISEN MIT HALTER

Die vorliegende Erfindung bezieht sich auf ein Schneideisen mit Halter und ist sowohl für Fach- wie für Nichtfachleute gedacht. In der Fachwelt sind Schneideisen bekannt, die herausnehmbar in den Schneideisenhalter eingesetzt werden können. Einerseits ergibt sich daraus der Vorteil, dass eine grosse Anzahl von Schneideisen mit einem einzigen Halter gebraucht werden können, aber andererseits der Nachteil, dass die Handhabung von solchen Schneideisen in derartigen Haltern für Nichtfachleute, Heim- oder Hobbyhandwerker recht schwierig ist. Es ist demgegenüber Aufgabe der vorliegenden Erfindung ein Schneideisen mit Halter zu schaffen, wobei einerseits die Handhabung erleichtert wird und das andererseits noch preisgünstiger ist. Diese Aufgabe wird mit einem Schneideisen mit Halter gemäss Anspruch 1 gelöst.

Die Erfindung wird im folgenden anhand einer Zeichnung eines Ausführungsbeispiels näher erläutert werden.

Figur 1 zeigt einen erfindungsgemässen Halter mit eingelegter Führungsbuchse,

Figur 2 zeigt den Halter von Figur 1 mit eingelegtem Schneideisen und

Figur 3 zeigt einen Schnitt gemäss III-III von Figur 2.

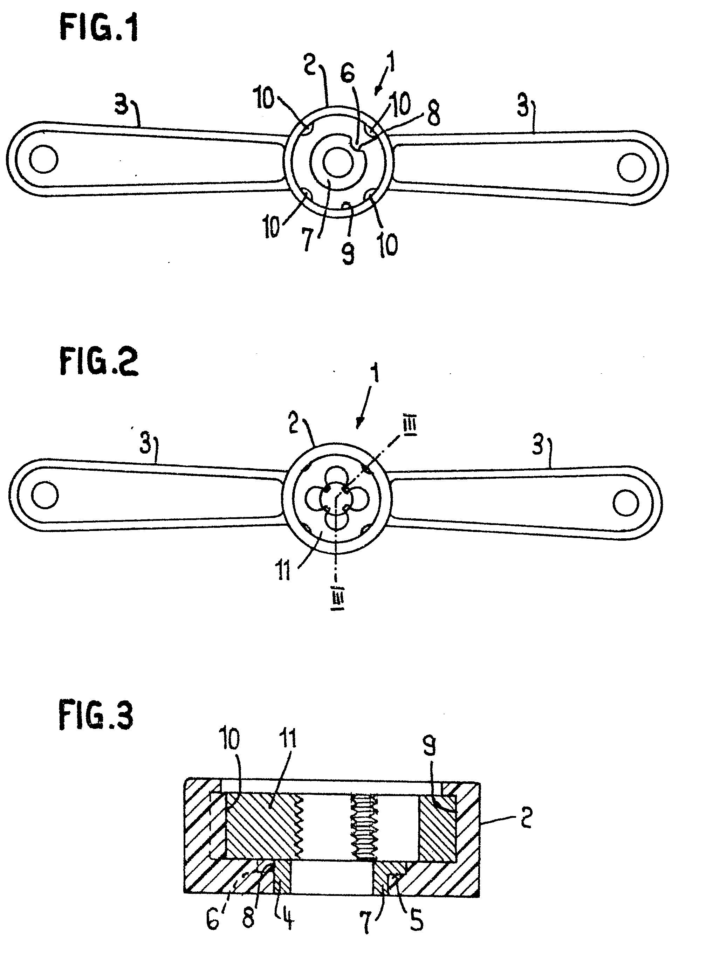

In Figur 1 erkennt man den Halter 1 aus gespritztem Kunststoff mit seinem Mittelteil 2 und den beiden Griffen 3. Das Mittelteil 2 des Halters weist auf der einen Seite eine kleine Bohrung 4 mit Absatz 5 auf, wobei im Absatz 5 ein Nocken 6 angeordnet ist, um ein Drehen der Führungsbuchse zu verhindern, die in diese kleinere Bohrung hineingepresst wird. Selbstverständlich weist die Führungsbuchse 7 eine dem Nocken 6 entsprechende Ausnehmung 8 auf. Es ist auch möglich den Halter 1 um die Führungsbuchse herum zu spritzen. An seiner anderen Seite weist das Mittelteil eine grössere Oeffnung 9 mit vier Nocken 10 auf, in welche das Schneideisen 11 hineingepresst wird. Nach dem Hineinpressen des Schneideisens werden die Ränder der Oeffnung umgebördelt, so dass das Schneideisen fest und nicht herausnehmbar im Halter befestigt ist. Es ist selbstverständlich, dass der innere Durchmesser der Führungsbuchse dem Gewinde-Aussendurchmesser des Schneideisens angepasst ist, wie aus Figur 3 hervorgeht.

Durch die Ausführung des Halters aus Kunststoff ist es möglich, ein preiswertes Schneideisen mit Halter zu schaffen und die Führungsbuchse erlaubt ein gutes Zentrieren und Führen des Schneideisens, was besonders für Nichtfachleute wichtig ist.

Es ist nicht unbedingt notwendig, den Halter aus Kunststoff anzufertigen; andere geeignete Materialien, beispielsweise Aluminiumspritzguss, sind ebenfalls verwendbar.

- 3 -

Patentansprüche

1. Schneideisen mit Halter
dadurch gekennzeichnet,
dass der Halter (1) ein Mittelteil (2), in welchem das Schneideisen (11) und daran anschliessend eine Führungsbuchse (7) nicht-entfernbar befestigt sind und zwei an das Mittelteil anschliessende Griffe (3) aufweist.

2. Schneideisen mit Halter nach Anspruch 1,
dadurch gekennzeichnet,
dass der Innendurchmesser der Führungsbuchse dem Gewinde-Aussendurchmesser angepasst ist.

3. Schneideisen mit Halter nach Anspruch 1 oder 2,
dadurch gekennzeichnet,
dass der Halter aus Kunststoff-Spritzguss hergestellt ist.

## FIG.1

## FIG.2

## FIG.3

**0061554**

Nummer der Anmeldung

Europäisches Patentamt

# EUROPÄISCHER RECHERCHENBERICHT

EP 81 81 0127

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 850 100 (REMS) | 1-3 |
| | DE - A - 2 409 809 (REMSWERK) | 3 |
| A | DE - A - 2 620 663 (REMSWERK) | 1 |
| A | CH - A - 136 101 (ROLLER) | 1 |
| A | CH - A - 119 769 (EMIL) | 1 |
| A | CH - A - 87 411 (SCHWEIZER) | 1 |

---

**KLASSIFIKATION DER ANMELDUNG (Int. Cl.³)**

B 23 G 1/30

**RECHERCHIERTE SACHGEBIETE (Int. Cl.³)**

B 23 G 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-11-1981 | HORVATH |

EPA form 1503.1  06.78